# EUROPÄISCHE PATENTSCHRIFT

(11) **EP 3 557 660 B1**
(45) Veröffentlichungstag und Bekanntmachung des Hinweises auf die Patenterteilung: **13.10.2021**
(21) Anmeldenummer: 19158471.3
(22) Anmeldetag: 21.02.2019
(51) Int. Cl.: B60L 53/16, B60L 53/18

(54) **ELEKTRISCH BETRIEBENES FAHRZEUG MIT LADEKABEL**
ELECTRICALLY OPERATED VEHICLE WITH CHARGING CABLE
VÉHICULE ÉLECTRIQUE AVEC CÂBLE DE RECHARGE

(30) Priorität: 20.04.2018 DE 102018206051
(43) Veröffentlichungstag der Anmeldung: 23.10.2019
(73) Patentinhaber: AUDI AG, 85045 Ingolstadt (DE)
(72) Erfinder: Stadler, Michael, 85080 Gaimersheim (DE); Diederichs, Heiko, 85092 Kösching (DE)

(56) Entgegenhaltungen:
- DE-A1-102009 030 092
- JP-A- 2010 288 319
- US-A1- 2014 179 141

## Beschreibung

Die Erfindung betrifft ein elektrisch betriebenes Fahrzeug mit einem elektrischen Ladekabel nach dem Oberbegriff des Anspruches 1 sowie ein Verfahren zum Diebstahlschutz eines Ladekabels nach dem Anspruch 7.

Zum Aufladen eines Akkumulators eines elektrisch betriebenen Fahrzeugs wird der Akkumulator über das elektrische Ladekabel mit einer Ladestation verbunden.

In einem elektrisch betriebenen Fahrzeug ist das Ladekabel während des Ladevorgangs in einer fahrzeugseitigen Ladedose eingesteckt und darin über eine Verriegelung gesichert. Dadurch kann ein unbeabsichtigtes oder unberechtigtes Abstecken des Ladekabels von der fahrzeugseitigen Ladedose vermieden werden.

Im Hinblick auf die Steigerung eines Ladekomforts kann das Ladekabel unmittelbar nach Abschluss des Ladevorgangs automatisch entriegelt werden, um ein einfaches Abstecken des Ladekabels für den Fahrer zu ermöglichen. Allerdings ist bei einem solchen automatisch entriegelten Ladekabel nach Abschluss des Ladevorgangs kein Diebstahlschutz mehr gewährleistet.

Aus der DE 20 2010 004 148 U1 ist eine Vorrichtung zur Übertragung einer Identifikationsinformation bekannt. Eine Kommunikationseinheit des Ladekabels dient zur Übertragung der Identifikationsinformation an eine Ladestation. Aus der DE 10 2012 002 842 A1 ist ein Verfahren zum Identifizieren eines mit einer Ladevorrichtung verbundenen Fahrzeugs bekannt. Dabei wird eine Identifikationsinformation von dem Fahrzeug über ein Ladekabel an die Ladevorrichtung übertragen. Aus der DE 10 2014 213 757 A1 ist eine Diebstahlschutzmaßnahme für ein Ladekabel bekannt, bei der ein nicht autorisiertes Abziehen des Ladekabels erfasst wird. In diesem Fall wird ein Sperrbefehl an das Ladekabel gesendet. Eine Entsperrung des Ladekabels ist durch eine Eingabe eines Entsperrcodes realisierbar.

Aus der DE 10 2009 030 092 A1 ist ein gattungsgemäßer Ladekabelstecker für Elektrofahrzeuge bekannt. Aus der US 2014/0179141 A1 und aus der JP 2010 288319 A ist jeweils ein elektrisch betriebenes Fahrzeug mit einem elektrischen Ladekabel bekannt.

Die Aufgabe der Erfindung besteht darin, ein elektrisch betriebenes Fahrzeug bereitzustellen, das im Hinblick auf einen Diebstahlschutz für das elektrische Ladekabel funktionell erweitert ist.

Die Aufgabe ist durch die Merkmale des Anspruches 1 oder 7 gelöst. Bevorzugte Weiterbildungen der Erfindung sind in den Unteransprüchen offenbart.

Erfindungsgemäß weist das Fahrzeug und/oder das Ladekabel eine zusätzliche Prüffunktion auf. Bei Vorliegen einer Nutzungsberechtigung schaltet die Prüffunktion eine Ladekabel-Nutzung frei. Demgegenüber wird bei Nichtvorliegen einer Nutzungsberechtigung die Ladekabel-Nutzung gesperrt. Erfindungsgemäß erfolgen also eine Überprüfung und/oder eine Zuordnung des Ladekabels zu einem Fahrzeug bzw. dessen Besitzer. Bei einer fehlgeschlagenen Zuordnung wird das Ladekabel funktionslos geschaltet und somit unbrauchbar gemacht, was davon abschreckt, das Ladekabel zu stehlen. Es ist jedoch hervorzuheben, dass die oben erwähnte Zuordnung nicht ausschließlich für ein einziges Fahrzeug gilt, da auch mit einem Ladekabel mehrere Fahrzeuge/Fahrzeugtypen zum Beispiel des Besitzers geladen werden sollen.

In einer technischen Umsetzung kann die Prüffunktion aus Software-Bausteinen aufgebaut sein, zum Beispiel aus einer Identifikations-Einheit und einer Freischalt-Einheit, die miteinander in Signalverbindung sind. In der Identifikations-Einheit kann ein ladekabelseitiger Identifikations-Code mit zumindest einem fahrzeugseitigen Identifikations-Code verglichen werden. Auf der Grundlage dieses Vergleiches kann die Identifikations-Einheit ein Berechtigungssignal generieren, und zwar für den Fall übereinstimmender Identifikations-Codes. Im Gegensatz dazu kann die Identifikations-Einheit ein Nichtberechtigungssignal generieren, sofern die beiden Identifikations-Codes nicht miteinander übereinstimmen, das heißt sofern ein ungültiger ladekabelseitiger Identifikations-Code vorliegt. Die oben genannten Signale liegen am Signaleingang der Freischalt-Einheit an. Bei Vorliegen des Berechtigungssignals schaltet die Freischalt-Einheit die Ladekabel-Nutzung frei. Demgegenüber sperrt die Freischalt-Einheit die Ladekabel-Nutzung, sofern ein Nichtberechtigungssignal am Signaleingang der Freischalt-Einheit anliegt.

Die Prüffunktion kann bevorzugt in einer elektronischen Ladekabel-Steuereinheit (das heißt E-Box) integriert sein. Die Ladekabel-Steuereinheit steht, bei an der Fahrzeug-Ladedose eingestecktem Ladekabel, in Signalverbindung mit der fahrzeugseitigen Prüffunktion, und zwar insbesondere über eine sogenannte Powerline-Kommunikation, wodurch während des Ladevorgangs unterschiedliche Ladefunktionen realisiert werden (zum Beispiel ULK-High, ULK-Basic).

In einer bevorzugten Weiterbildung kann in der Ladekabel-Steuereinheit (E-Box) der ladekabelseitige Identifikations-Code hinterlegt sein. Der Identifkations-Code muss eineindeutig sein. Der Code muss so im Steuergerät des Ladekabels hinterlegt sein, dass Manipulationen ausgeschlossen werden können, zum Beispiel durch eineindeutige einmal beschreibbare Register im Controller.

Bei eingestecktem Ladekabel kann der ladekabelseitige Identifikations-Code über die Signalverbindung zur fahrzeugseitigen Prüffunktion übermittelt werden. Diese schaltet dann bei Vorliegen eines gültigen ladekabelseitigen Identifikations-Codes die Ladekabel-Nutzung frei oder sperrt im umgekehrten Fall die Ladekabel-Nutzung. Zusätzlich wäre es von Vorteil, falls der Energielieferant / Serviceprovider auch mit dem Ladekabel kommunizieren kann, auch anhand der Liste der berechtigten Ladekabel-IDs das Ladekabel sperrt, falls die ID nicht mehr gültig ist.

Der ladekabelseitige Identifikations-Code kann entweder analog eines Schlüssels angelernt werden. In diesem Fall wird nur das angelernte Ladekabel vom Fahrzeug akzeptiert. Diese Lösung kann jedoch den Nachteil, dass bei einem defekten Ladekabel nicht einfach ein anderes Ladekabel verwendbar ist, um zumindest das Fahrzeug in diesem Notfall aufzuladen.

Demgegenüber besteht eine alternative Lösung darin, dass in der Prüffunktion eine Liste mit einer Mehrzahl von ladekabelseitigen Identifikations-Codes hinterlegt ist. Diese werden bei der Prüfung auf Berechtigung mit dem erfassten ladekabelseitigen Identifikations-Code verglichen. Sofern keine übereinstimmenden Identifikations-Codes ermittelt werden können, wird dies in einem fahrzeuginternen Speicher abgespeichert.

Der Prüffunktion ist eine Zählereinheit zugeordnet, die bei Erkennung eines ungültigen Identifikations-Codes (bzw. bei Vorliegen einer Nichtberechtigung) einen Zählwert um eins hochzählt, und zwar bis zum Erreichen eines in der Zählereinheit vorgegebenen Maximalwerts. Bei einem Zählwert kleiner als dieser Maximalwert schaltet die Freischalt-Einheit die Ladekabel-Nutzung frei, obwohl von der Identifikations-Einheit keine übereinstimmenden Identifikations-Codes ermittelt worden sind. In diesem Fall wird erst mit Erreichen des Maximalwerts in der Freischalt-Einheit ein Sperrsignal generiert, um die Ladekabel-Nutzung zu sperren.

Die oben erwähnte Liste von ladekabelseitigen Identifikations-Codes können in der fahrzeugseitigen Prüffunktion immer wieder aktualisiert werden, zum Beispiel durch ein im Fahrzeug verbautes Online-Modul oder durch Nutzung des Online-Zugangs eines Mobiltelefons. Die Liste kann vom Hersteller in einem festgeschriebenen Turnus aktualisiert werden. Falls die Liste nicht mehr aktualisiert wird, werden im Fahrzeug entsprechend Einschränkungen getroffen. Diese Maßnahme ist als Option zu betrachten, um sicherzustellen, dass die Liste auch immer wieder aktualisiert wird. Die Aktualisierung der ID-Liste kann beispielsweise durch verschiedene möglichen Datenspeicher realisiert werden (angenommen ist natürlich die online-Verbindung zu diesen Speichern), nämlich Backend, HEMS (home energy management system), Service-Provider oder dergleichen.

Nachfolgend ist ein Ausführungsbeispiel der Erfindung anhand der beigefügten Figuren beschrieben.

Es zeigen:
- Figur 1: in einer grob schematischen Darstellung ein elektrisch betriebenes Fahrzeug, dessen Akkumulator über ein elektrisches Ladekabel an einer Ladestation angeschlossen ist; und
- Figur 2: in einem Blockschaltdiagramm ein, einer fahrzeugseitigen Lade-Steuereinheit zugeordneter Prüf-Funktionsbaustein.

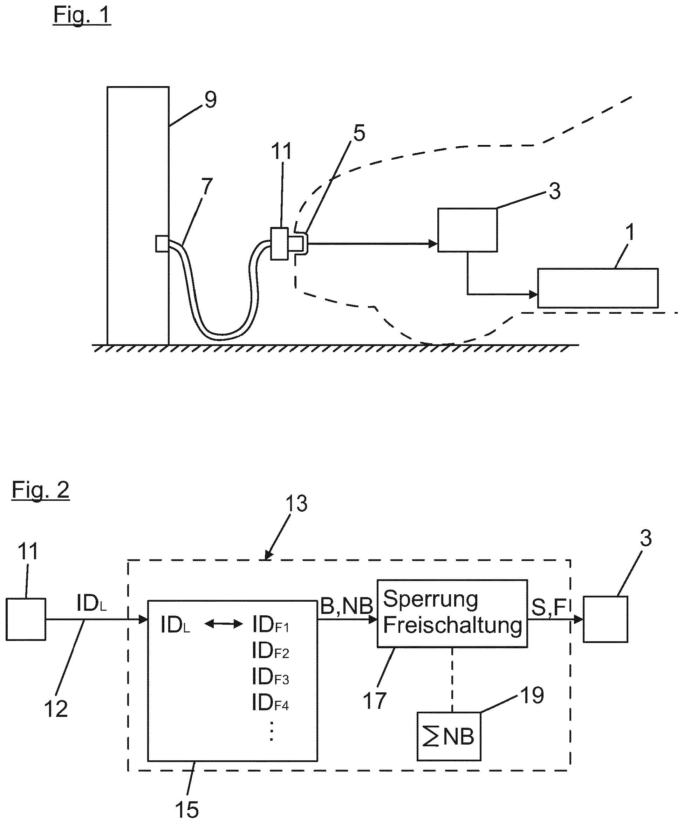

Die Figuren 1 und 2 sind grob vereinfacht nur insoweit dargestellt, als es zum Verständnis der Erfindung erforderlich ist. So ist in der Figur 1 ein elektrisch betriebenes Fahrzeug mit einem Akkumulator 1 gezeigt, der einen elektrischen Antrieb des Fahrzeugs mit elektrischer Energie versorgt. Dem Akkumulator 1 ist eine Akkumulator-Steuereinheit 3 sowie eine fahrzeugseitige Ladedose 5 zugeordnet.

In der Figur 1 ist ein Ladevorgang angedeutet, in dem ein Ladekabel 7 sowohl in der fahrzeugseitigen Ladedose 5 als auch in einer fahrzeugexternen Ladestation 9 eingesteckt ist, mittels der der Akkumulator 1 aufladbar ist. Während des Ladevorgangs ist das Ladekabel 7 über eine nicht gezeigte Verriegelung in der fahrzeugseitigen Ladedose 5 gegen ein Herausziehen gesichert. Nach Abschluss des Ladevorgangs wird dagegen das Ladekabel 7 automatisch entriegelt, so dass das Ladekabel 7 in einfacher Weise (ohne zusätzliche fahrerseitige Betätigung eines Verriegelungselements) aus der fahrzeugseitigen Ladedose 5 herausziehbar ist.

In der Figur 1 weist das Ladekabel 7 ein Ladekabel-Steuergerät 11 auf, das während des Ladevorgangs zum Beispiel über eine Powerline-Kommunikation 12 (Figur 2) mit dem Akkumulator-Steuergerät 3 ist, um während des Ladevorgangs unterschiedliche Ladefunktionen zu realisieren (zum Beispiel ULK-High, ULK-Basic). Erfindungsgemäß ist in dem Ladekabel-Steuergerät 11 zusätzlich ein ladekabelseitiger Identifikationscode ID_{L} hinterlegt. Anhand des ladekabelseitiger Identifikationscodes ID_{L} wird in einem in der Figur 2 angedeuteten Prüf-Funktionsbaustein 13 der Akkumulator-Steuereinheit 3 geprüft, ob eine Berechtigung bzw. Autorisierung vorliegt, das Ladekabel 7 zu nutzen oder nicht.

Wie aus der Figur 2 hervorgeht, weist der Prüf-Funktionsbaustein 13 eine Identifikations-Einheit 15, eine Freischalt-Einheit 17 sowie eine Zähler-Einheit 19 auf. Die Identifikations-Einheit 15 ist eingangsseitig in Signalverbindung 12 (das heißt Powerline-Kommunikation) mit dem Ladekabel-Steuergerät 11. Über die Signalverbindung 12 wird der ladekabelseitige Identifikations-Code ID_{L} zur Identifikations-Einheit 15 übermittelt. Darin wird der ladekabelseitige Identifikations-Code ID_{L} mit einer Liste, bestehend aus einer Mehrzahl von fahrzeugseitigen Identifikations-Codes ID_{F1} bis ID_{F4} verglichen, die in dem Prüf-Funktionsbaustein 13 hinterlegt sind. Sofern der ladekabelseitige Identifikations-Code ID_{L} mit einem dieser fahrzeugseitigen Identifikations-Codes ID_{F1} bis ID_{F4} übereinstimmt, erzeugt die Identifikations-Einheit 15 ein Berechtigungssignal B. Andernfalls erzeugt die Identifikations-Einheit 15 ein Nichtberechtigungssignal NB. Das jeweilige Signal B, NB liegt am Signaleingang der Freischalt-Einheit 17 an. Diese generiert ein Freischaltsignal F, sofern in der Identifikations-Einheit 15 ein gültiger ladekabelseitiger Identifikationscode ID_{L} erkannt worden ist (das heißt sofern ein Berechtigungssignal B erzeugt worden ist). Andernfalls generiert die Freischalt-Einheit 17 ein Sperrsignal S, mit dem die Ladekabel-Nutzung gesperrt wird. Das Sperrsignal S bzw. das Freischaltsignal F liegen am Signaleingang der Akkumulator-Steuereinheit 3 an. In einer Weiterbildung der obigen Erfindung kann dem Prüf-Funktionsbaustein 13 zusätzlich die Zählereinheit 19 zugeordnet sein. Diese zählt bei Erkennung eines ungültigen ladekabelseitigen Identifikations-Codes ID_{L} einen Zählwert um eins nach oben, und zwar bis zum Erreichen eines Maximalwerts. Solange der Zählwert kleiner ist als der Maximalwert, erzeugt die Freischalteinheit 17 - trotz Vorliegen eines ungültigen ladekabelseitigen Identifikations-Codes ID_{L} - ein Freischaltsignal F, mit dem die Ladekabel-Nutzung freigeschaltet wird. Erst mit Erreichen des Maximalwerts erzeugt die Freischalt-Einheit 17 ein Sperrsignal S, um eine Ladekabel-Nutzung zu unterbinden.

## Patentansprüche

1. Elektrisch betriebenes Fahrzeug mit einem elektrischen Ladekabel (7), mittels dem in einem Ladevorgang ein fahrzeugseitiger Akkumulator (1) von einem fahrzeugexternen Stromversorgungsnetz (9) aufladbar ist, wobei das Ladekabel (7) zumindest nach Abschluss des Ladevorgangs, insbesondere selbsttätig verriegelungsfrei, von einem fahrzeugseitigen Anschluss (5) absteckbar ist, wobei das Fahrzeug und/oder das Ladekabel (7) eine Prüffunktion (13) aufweist, die bei Vorliegen einer Nutzungsberechtigung eine Ladekabel-Nutzung freischaltet und bei Nichtvorliegen einer Nutzungsberechtigung die Ladekabel-Nutzung sperrt, **dadurch gekennzeichnet, dass** der Prüffunktion (13) eine Zählereinheit (19) zugeordnet ist, die bei Erkennung eines ungültigen ID-Codes (ID_{L}) oder bei Vorliegen einer Nichtberechtigung einen Zählwert um 1 hochzählt bis zum Erreichen eines Maximalwerts, und dass bei einem Zählwert kleiner als der Maximalwert die Prüffunktion (13) die Ladekabel-Nutzung freischaltet, und zwar trotz Vorliegen einer Nichtberechtigung, und dass erst mit Erreichen des Maximalwerts die Prüffunktion (13) die Ladekabel-Nutzung sperrt.

2. Elektrisch betriebenes Fahrzeug nach Anspruch 1, **dadurch gekennzeichnet, dass** die Prüffunktion (13) eine Identifikations-Einheit (15) und eine Freischalt-Einheit (17) aufweist, wobei in der Identifikations-Einheit (15) ein ladekabelseitiger ID-Code (ID_{L}) mit zumindest einem fahrzeugseitigen ID-Code (ID_{F}) verglichen wird, und dass auf der Grundlage dieses Vergleiches die Identifikations-Einheit (15) ein Berechtigungssignal (B) oder ein Nichtberechtigungssignal (NB) generiert, das am Signaleingang der Freischalt-Einheit (17) anliegt, und dass die Freischalt-Einheit (17) bei Vorliegen des Berechtigungssignals (B) die Ladekabel-Nutzung freischaltet und bei Vorliegen des Nichtberechtigungssignals (NB) die Ladekabel-Nutzung sperrt.

3. Elektrisch betriebenes Fahrzeug nach Anspruch 2, **dadurch gekennzeichnet, dass** das Ladekabel (7) eine Ladekabel-Steuereinheit oder E-Box (11) aufweist, und dass die Ladekabel-Steuereinheit (11) bei am fahrzeugseitigen Anschluss (5) eingestecktem Ladekabel (7) in Signalverbindung (12) mit der fahrzeugseitigen Prüffunktion (13) steht, insbesondere eine Powerline-Kommunikation, um während des Ladevorgangs unterschiedliche Ladefunktionen zu realisieren.

4. Elektrisch betriebenes Fahrzeug nach Anspruch 3, **dadurch gekennzeichnet, dass** in der Ladekabel-Steuereinheit (11) des Ladekabels (7) der ladekabelseitige ID-Code (ID_{L}) hinterlegt ist, der über die Signalverbindung (12) zur fahrzeugseitigen Prüffunktion (13) übermittelbar ist, und/oder dass die Prüffunktion (13) bei Vorliegen eines gültigen ladekabelseitigen ID-Codes (ID_{L}), das heißt bei übereinstimmenden ID-Codes (ID_{L}, ID_{F}), die Ladekabel-Nutzung freischaltet, oder bei Vorliegen zumindest eines ungültigen ladekabelseitigen ID-Codes (ID_{L}) die Ladekabel-Nutzung sperrt.

5. Elektrisch betriebenes Fahrzeug nach einem der Ansprüche 2 bis 4, **dadurch gekennzeichnet, dass** in der Prüffunktion (13) eine Liste mit einer Mehrzahl von fahrzeugseitigen oder ladekabelseitigen ID-Codes (ID_{F}) hinterlegt sind, die bei der Prüfung auf Berechtigung mit dem ladekabelseitigen ID-Code (ID_{L}) verglichen werden, und dass insbesondere bei Übereinstimmung des ladekabelseitigen ID-Codes (IDL) mit einem der fahrzeugseitigen ID-Codes (ID_{F}) eine Freischaltung der Ladekabel-Nutzung erfolgt.

6. Elektrisch betriebenes Fahrzeug nach einem der vorhergehenden Ansprüche, **dadurch gekennzeichnet, dass** die in der Prüffunktion (13) hinterlegte Liste von ID-Codes (ID_{F1} bis ID_{F4}) aktualisierbar ist, etwa durch ein im Fahrzeug verbautes Online-Modul oder durch Nutzung des Online-Zugangs eines Mobiltelefons.

7. Verfahren zum Diebstahlschutz eines Ladekabels (7) für ein elektrisch betriebenes Fahrzeug mit einem elektrischen Ladekabel (7), mittels dem in einem Ladevorgang ein fahrzeugseitiger Akkumulator (1) von einem fahrzeugexternen Stromversorgungsnetz (9) aufladbar ist, wobei das Ladekabel (7) zumindest nach Abschluss des Ladevorgangs, insbesondere selbsttätig verriegelungsfrei, von einem fahrzeugseitigen Anschluss (5) absteckbar ist, wobei das Fahrzeug und/oder das Ladekabel (7) eine Prüffunktion (13) aufweist, die bei Vorliegen einer Nutzungsberechtigung eine Ladekabel-Nutzung freischaltet und bei Nichtvorliegen einer Nutzungsberechtigung die Ladekabel-Nutzung sperrt, **dadurch gekennzeichnet, dass** der Prüffunktion (13) eine Zählereinheit (19) zugeordnet ist, die bei Erkennung eines ungültigen ID-Codes (ID_{L}) oder bei Vorliegen einer Nichtberechtigung einen Zählwert um 1 hochzählt bis zum Erreichen eines Maximalwerts, und dass bei einem Zählwert kleiner als der Maximalwert die Prüffunktion (13) die Ladekabel-Nutzung freischaltet, und zwar trotz Vorliegen einer Nichtberechtigung, und dass erst mit Erreichen des Maximalwerts die Prüffunktion (13) die Ladekabel-Nutzung sperrt.

## Claims

1. Electrically operated vehicle having an electrical charging cable (7) by means of which a vehicle-side accumulator (1) is chargeable by a vehicle-external power supply network (9) in a charging process, wherein the charging cable (7) can be unplugged from a vehicle-side terminal (5), in particular automatically in a lock-free manner, at least after completion of the charging process, wherein the vehicle and/or the charging cable (7) has a check function (13) which enables charging cable usage if a usage authorisation is present and blocks the charging cable usage if a usage authorisation is not present, **characterised in that** a counter unit (19) is associated with the check function (13) and, if an invalid ID code (ID_{L}) is detected or if a non-authorisation is present, increments a numeric value by 1 until a maximum value is reached, and **in that** the check function (13) enables the charging cable usage given a numeric value less than the maximum value, and does so in spite of the presence of a non-authorisation, and **in that** the check function (13) only blocks the charging cable usage upon reaching the maximum value.

2. Electrically operated vehicle according to claim 1, **characterised in that** the check function (13) has an identification unit (15) and an enabling unit (17), wherein a charging cable-side ID code (ID_{L}) is compared in the identification unit (15) to at least one vehicle-side ID code (ID_{F}), and **in that**, on the basis of this comparison, the identification unit (15) generates an authorisation signal (B) or a non-authorisation signal (NB) which is applied to the signal input of the enabling unit (17), and **in that** the enabling unit (17) enables the charging cable usage if the authorisation signal (B) is present and blocks the charging cable usage if the non-authorisation signal (NB) is present.

3. Electrically operated vehicle according to claim 2, **characterised in that** the charging cable (7) has a charging cable control unit or E-box (11), and **in that** the charging cable control unit (11) has a signal connection (12), in particular a power line communication, with the vehicle-side check function (13) when the charging cable (7) is plugged into the vehicle-side terminal (5), to implement different charging functions during the charging process.

4. Electrically operated vehicle according to claim 3, **characterised in that** the charging cable-side ID code (ID_{L}) is stored in the charging cable control unit (11) of the charging cable (7) and is transmittable via the signal connection (12) to the vehicle-side check function (13), and/or **in that** the check function (13) enables the charging cable usage if a valid charging cable-side ID code (ID_{L}) is present, i.e. if the ID codes (ID_{L}, ID_{F}) match, or blocks the charging cable usage if at least one invalid charging cable-side ID code (ID_{L}) is present.

5. Electrically operated vehicle according to any of claims 2 to 4, **characterised in that** a list having a plurality of vehicle-side or charging cable-side ID codes (ID_{F}) is stored in the check function (13), which codes are compared to the charging cable-side ID code (ID_{L}) during the check for authorisation, and **in that** the charging cable usage is enabled in particular if the charging cable-side ID code (ID_{L}) matches one of the vehicle-side ID codes (ID_{F}).

6. Electrically operated vehicle according to any of the preceding claims, **characterised in that** the list of ID codes (ID_{F1} to ID_{F4}) stored in the check function (13) can be updated, for example by an online module installed in the vehicle or by using the online access of a mobile telephone.

7. Method for preventing theft of a charging cable (7) for an electrically operated vehicle having an electrical charging cable (7) by means of which a vehicle-side accumulator (1) is chargeable by a vehicle-external power supply network (9) in a charging process, wherein the charging cable (7) can be unplugged from a vehicle-side terminal (5), in particular automatically in a lock-free manner, at least after completion of the charging process, wherein the vehicle and/or the charging cable (7) has a check function (13) which enables charging cable usage if a usage authorisation is present and blocks the charging cable usage if a usage authorisation is not present, **characterised in that** a counter unit (19) is associated with the check function (13) and, if an invalid ID code (ID_{L}) is detected or if a non-authorisation is present, increments a numeric value by 1 until a maximum value is reached, and **in that** the check function (13) enables the charging cable usage given a numeric value less than the maximum value, and does so in spite of the presence of a non-authorisation, and **in that** the check function (13) only blocks the charging cable usage upon reaching the maximum value.

## Revendications

1. Véhicule à propulsion électrique avec un câble de chargement (7) électrique, au moyen duquel un accumulateur (1) côté véhicule peut être chargé à partir d'un réseau d'alimentation en énergie (9) extérieur au véhicule lors d'un processus de charge, dans lequel le câble de chargement (7) peut être déconnecté d'un raccordement (5) côté véhicule, en particulier de manière automatique sans être verrouillé, au moins après la fin du processus de charge, à partir d'une connexion (5) sur le véhicule, dans lequel le véhicule et/ou le câble de chargement (7) présentent une fonction de test (13) qui débloque l'utilisation du câble de chargement s'il existe une autorisation d'utilisation et bloque l'utilisation du câble de chargement s'il n'existe pas d'autorisation d'utilisation, **caractérisé en ce qu'**à la fonction de test (13) est associée une unité de comptage (19) qui compte une valeur de comptage par 1 jusqu'à ce qu'une valeur maximale soit atteinte lorsqu'un code d'identification invalide (IDL) est détecté ou lorsqu'une non-autorisation est présente, et **en ce que** la fonction de test (13) débloque l'utilisation du câble de chargement lorsque la valeur de comptage est inférieure à la valeur maximale, et ce, malgré la présence d'une non-autorisation, et **en ce que** la fonction de test (13) bloque l'utilisation du câble de chargement uniquement lorsque la valeur maximale est atteinte.

2. Véhicule à propulsion électrique selon la revendication 1, **caractérisé en ce que** la fonction de test (13) présente une unité d'identification (15) et une unité de déblocage (17), dans lequel dans l'unité d'identification (15) un code d'identification (IDL) côté câble de chargement est comparé à au moins un code d'identification (IDF) du côté du véhicule, et **en ce que**, sur la base de cette comparaison, l'unité d'identification (15) génère un signal d'autorisation (B) ou un signal de non-autorisation (NB) qui est présent à l'entrée de signal de l'unité de déblocage (17), et **en ce que** l'unité de déblocage (17) débloque l'utilisation du câble de chargement si le signal d'autorisation (B) est présent et bloque l'utilisation du câble de chargement si le signal de non-autorisation (NB) est présent.

3. Véhicule à propulsion électrique selon la revendication 2, **caractérisé en ce que** le câble de chargement (7) présente une unité de commande de câble de chargement ou e-box (11), et **en ce que** l'unité de commande de câble de chargement (11) est en liaison de signalisation (12) avec la fonction de test (13) côté véhicule lorsque le câble de chargement (7) est enfiché dans le raccordement (5) côté véhicule, en particulier une communication par courant porteur, afin de mettre en œuvre différentes fonctions de chargement pendant le processus de chargement.

4. Véhicule à propulsion électrique selon la revendication 3, **caractérisé en ce que** le code d'identification (IDL) côté câble de chargement est mémorisé dans l'unité de commande de câble de chargement (11) du câble de chargement (7), lequel code peut être transmis à la fonction de test (13) côté véhicule par l'intermédiaire de la liaison de signalisation (12), et/ou **en ce que** la fonction de test (13) débloque l'utilisation du câble de chargement si un code d'identification (IDL) valide est présent côté câble de chargement, c'est-à-dire si les codes d'identification (IDL, IDF) correspondent, ou bloque l'utilisation du câble de chargement si au moins un code d'identification (IDL) invalide est présent côté câble de chargement.

5. Véhicule à propulsion électrique selon l'une quelconque des revendications 2 à 4, **caractérisé en ce que** dans la fonction de test (13) est mémorisée une liste avec une pluralité de codes d'identification (IDF) côté véhicule ou côté câble de chargement, qui sont comparés au code d'identification (IDL) côté câble de chargement lors du contrôle d'autorisation, et **en ce que** en particulier dans le cas où le code d'identification (IDL) côté câble de chargement correspond à l'un des codes d'identification (IDF) côté véhicule, l'utilisation du câble de chargement est débloquée.

6. Véhicule à propulsion électrique selon l'une quelconque des revendications précédentes, **caractérisé en ce que** la liste des codes d'identification (IDF1 à IDF4) mémorisés dans la fonction de test (13) peut être mise à jour, par exemple par un module en ligne monté dans le véhicule ou en utilisant l'accès en ligne d'un téléphone mobile.

7. Procédé pour la protection contre le vol d'un câble de chargement (7) pour un véhicule à propulsion électrique avec un câble de chargement (7) électrique, au moyen duquel un accumulateur (1) côté véhicule peut être chargé à partir d'un réseau d'alimentation en énergie (9) extérieur au véhicule lors d'un processus de chargement, dans lequel le câble de chargement (7) peut être déconnecté d'un raccordement (5) côté véhicule, en particulier de manière automatique sans être verrouillé, au moins après la fin du processus de chargement, à partir d'une connexion (5) sur le véhicule, dans lequel le véhicule et/ou le câble de chargement (7) présentent une fonction de test (13) qui débloque l'utilisation du câble de chargement s'il existe une autorisation d'utilisation et bloque l'utilisation du câble de chargement s'il n'existe pas d'autorisation d'utilisation, **caractérisé en ce qu'**à la fonction de test (13) est associée une unité de comptage (19) qui compte une valeur de comptage par 1 jusqu'à ce qu'une valeur maximale soit atteinte lorsqu'un code d'identification invalide (IDL) est détecté ou lorsqu'une non-autorisation est présente, et **en ce que** la fonction de test (13) débloque l'utilisation du câble de chargement lorsque la valeur de comptage est inférieure à la valeur maximale, et ce, malgré la présence d'une non-autorisation, et **en ce que** la fonction de test (13) bloque l'utilisation du câble de chargement uniquement lorsque la valeur maximale est atteinte.
